Europäisches Patentamt

European Patent Office

Office européen des brevets

(19)

(11) Veröffentlichungsnummer: **0 039 792**
**A1**

## (12) EUROPÄISCHE PATENTANMELDUNG

(21) Anmeldenummer: **81102797.8**

(22) Anmeldetag: **11.04.81**

(51) Int. Cl.³: **A 01 B 49/02**
**A 01 B 29/04**

(30) Priorität: **09.05.80 DE 3017746**
**29.11.80 DE 3045144**

(43) Veröffentlichungstag der Anmeldung:
**18.11.81 Patentblatt 81/46**

(84) Benannte Vertragsstaaten:
**AT BE CH FR GB IT LI NL SE**

(71) Anmelder: **Weichel, Ernst**
**Bahnhofstrasse 1**
**D-7326 Heiningen(DE)**

(72) Erfinder: **Weichel, Ernst**
**Bahnhofstrasse 1**
**D-7326 Heiningen(DE)**

(54) Arbeitsgerät zur Saatbettherrichtung.

(57) Bei einem Arbeitsgerät zur Saatbettherrichtung bzw. zum Einmischen von Stroh in den Ackerboden ist neben einer mit Messern oder Zinken (20) besetzten Fräserwelle (19) und nachgeordneter Krümelwalze (23), ein Siebrost oder Rechen (34), zwischen beiden Elementen vorgesehen.

Dieser Siebrost oder Rechen (34) dient dabei dazu, daß das von den Zinken (20) der Werkzeugwelle (19) gelockerte und nach hinten geworfene Gemisch aus Feinerde, Krümeln und Schollen durch die horizontalen Zwischenräume Zwischen den Längsstäben (27) hindurch gegen den Siebrost (34) geworfen wird, so daß die Feinerde und kleine Krümel bzw. Schollen zwischen den Stäben (36) in das Innere der Krümelwalze (23) gelangen, während die halmartigen Ernterückstände und verfilztes Material von dem Siebrost (34) zurückgehalten und durch die aus dem Innern der Krümelwalze (23) austretenden Feinerde zusätzlich bedeckt werden.

./...

*Fig. 1*

*Fig. 3*

ERNST WEICHEL          D 7326 HEININGEN, 10. März 1981

Bahnhofstr. 1

<u>Arbeitsgerät zur Saatbettherrichtung</u>

Die Erfindung bezieht sich auf ein Arbeitsgerät zur
Saatbettherrichtung, insbesondere zum Einmischen von
Getreide- oder Körnermaisstroh u.ä. in den Ackerboden,
durch eine bauliche Ausgestaltung gemäß dem Oberbegriff des Hauptanspruches.

Diese bekannten Arbeitsgeräte, z.B. Ackerfräsen, Rotoreggen, Zinkenrotoren usw., haben den Nachteil, daß sie
auf dem Erdboden vorhandene Ernterückstände, insbesondere Getreidestroh, Körnermaisstroh und anderes nur
mehr oder weniger unvollständig in den gelockerten
Boden einmischen können. Deshalb wurden bisher große
Mengen derartiger Ernterückstände entweder sofort nach
der Ernte verbrannt oder untergepflügt.

Die Nachteile solcher Verbrennungsvorgänge auf das Bodenleben und für die Umwelt sind jedoch ebenso hinreichend
bekannt, wie diejenigen des tiefen Unterpflügens.
Die Nachteile des unvollständigen Einmischens pflanzlicher Rückstände in den Boden liegen im wesentlichen

- 2 -

darin, daß Pflanzenschädlinge, wie z.B. der Maiszünzler, in oberirdischen Strohresten gut überwintern können, und daß auch die Arbeit üblicher
Drillmaschinen durch oberirdisch vorhandene Strohreste sehr erschwert wird.

Erfolglos waren bislang auch Versuche, langhalmige
Rückstände dadurch vollständig in den Boden einzubringen,
daß hinter einer rotierenden Werkzeugwelle und vor der an
sich bekannten Krümel- oder Packerwalze ein Siebrost mit
nach unten ragenden Stäben angebracht wurde, durch deren
Zwischenräume die zerkleinerte Erde nach hinten geschleudert werden sollte, während die halmartigen Teile entlang
der schräg gestellten Stahlzinken nach unten rutschen
sollten. Dies lag darin begründet, weil sich das Getreidestroh, insbesondere wenn es relativ feucht war, vor den
Stäben staute und stets zu Verstopfungen führte.

Die vorliegende Erfindung hat sich deshalb die Aufgabe
gestellt, eine Krümelwalze mit einem Sieborgan zu schaffen, das eine vollständige und gleichmäßige Einmischung
auch größter Mengen von Getreide- oder Körnermaisstroh
bzw. anderer Ernterückstände in den gelockerten Erdboden
auf einstellbare Tiefe ermöglicht, ohne daß Verstopfungen
oder Strohmatrazen im Boden entstehen oder die Arbeit
von Drillmaschinen behindert wird.

- 3 -

Des weiteren ist es Aufgabe der Erfindung, ein hierfür
geeignetes Arbeitsgerät baulich und funktionell derart
zu gestalten, daß eine relativ einfache, jedoch funktionell
voll befriedigende und den hohen Beanspruchungen im praktischen Einsatz entsprechende Konstruktion geschaffen wird.
Insbesondere sollen dabei auch baulich und funktionell Maßnahmen getroffen werden, die einen wesentlich verbesserten
Mahl- bzw. Einmischeffekt ergeben.

Gelöst wird diese Aufgabe durch die in den Patentansprüchen
angegebenen baulichen Mittel und Maßnahmen, die in Verbindung mit den zugeordneten Zeichnungen im folgenden einzeln
näher erläutert sind. Hierbei sollen solche Merkmale, die
in einer Figur gezeichnet oder beschrieben sind, sinngemäß
auch auf die Ausführungsbeispiele der anderen Figuren übertragbar sein.

Es zeigen:

Figur 1    eine schmatische Seitenansicht,

Figur 2    eine schematische Teildraufsicht auf eine
           Gerätekombination zur Bodenlockerung und
           Saatbettherrichtung,

Figur 3    eine schematische, teilweise geschnittene
           Seitenansicht auf ein abgewandeltes Ausführungsbeispiel des Gerätes zur Saatbettherrichtung in
           Arbeitsstellung,

- 4 -

Figur 4    eine schematische Ansicht auf ein weiteres Aus-
           führungsbeispiel des Gerätes zur Saatbetther-
           richtung,

Figur 5    eine teilweise geschnittene Seitenansicht auf die
           Krümelwalze nach der Erfindung,

Figur 6    eine entsprechende Ansicht auf ein anderes
           Ausführungsbeispiel,

Figur 7    eine teilweise geschnittene Teilansicht von
           hinten zu Figur 5,

Figur 8    eine weitere Alternativausführung des erfindungsgemäßen Gerätes und

Figur 9    eine Draufsicht zu Fig. 8.

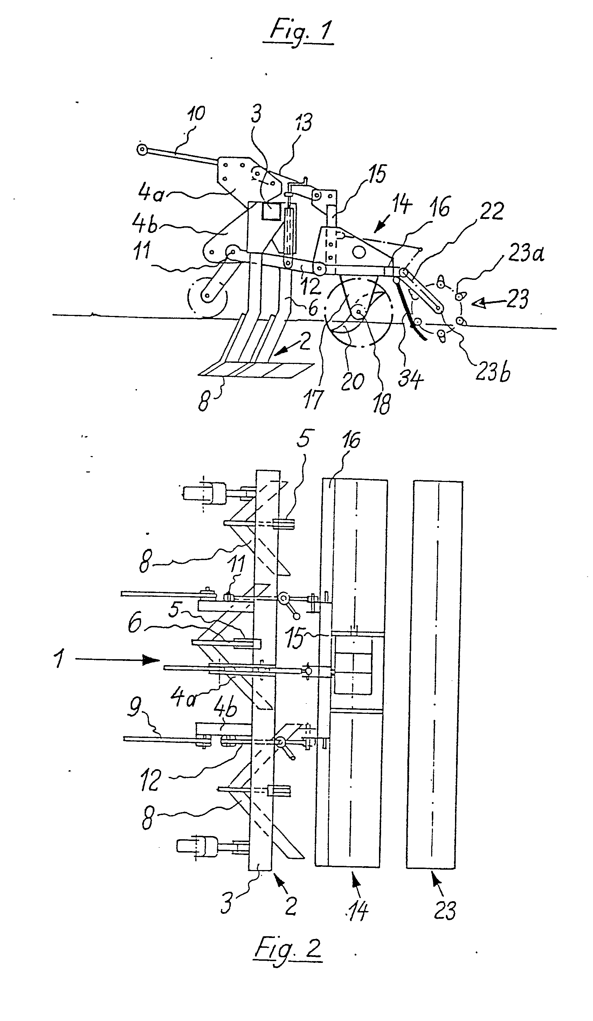

Wie Fig. 1 und 2 zeigen, besteht die Gerätekombination 1
aus einem Gerät zur Bodenlockerung 2, das ein Tragrohr 3
mit Anbauböcken 4a, 4b aufweist, an denen die Unterlenker 9
und 10 eines nicht näher dargestellten Traktors angreifen.
Am Tragrohr 3 sind in Werkzeughaltern 5 Werkzeugstiele 6
lösbar befestigt, an deren unterem Ende eine an sich bekannte, zeichnerisch nicht dargestellte Befestigungsplatte
angeschweißt ist, auf der flügelförmige Lockerungsschare 8
lösbar befestigt sind. Durch diese Flügelschare wird die
oberste Bodenschicht ganzflächig unterschnitten und ange-

- 5 -

hoben, so daß sie von den Zinken 20 einer Werkzeugwelle 19 eines Gerätes zur Saatbettherrichtung 14 annähernd in der Luft zerkleinert wird.

Das Gerät 14 ist durch Unterlenker 12, die an einem Anlenkbolzen 11 am Anbaubock 4b angelenkt sind, und einen Oberlenker 13 höhenverstellbar mit dem Gerät zur Bodenlockerung 2 verbunden. Das Gerät zur Saatbettherrichtung 14 weist einen Tragrahmen 16 auf, an dessen Vorderseite ein mittiger Anbaubock 15 befestigt ist und an dessen äußeren Enden Lagerkonsolen 17 angebracht sind, die nach unten ragen und die Lager 18 der Werkzeugwelle 19 mit Zinken 20 aufnehmen. Am hinteren Ende des Tragrahmens 16 sind Tragarme 22 gelagert, zwischen deren freien Enden eine Krümelwalze 23 in an sich bekannter Weise drehbar gelagert ist, auf deren gedachter Mantelfläche 23a in einem Abstand zueinander angeordnete Längsstäbe 27 angeordnet sind.

Auf einer starr mit den Tragarmen 22 verbundenen Achse 24 ist als Drehachse 23b der Krümelwalze 23 eine Hohlnabe 25 gelagert, an der Speichen 38 oder Scheiben 26 befestigt sind, an welchen die freien Enden der Längsstäbe 27 in bekannter Weise lösbar oder starr befestigt sind. Die Achse 24 ist entweder wenigstens viermal abgekröpft, so daß ihr Mittelteil 24a als Träger im Innern der Krümelwalze 23 und in einem geringen Abstand von den Innenseiten des vorderen Teils der Umlaufbahnen der Längsstäbe 27 angeordnet ist.

- 6 -

Der Träger 24a bildet einen langen Mittelteil der Achse
24, der aus einem geraden Winkel- oder Hohlprofil bzw.
einer Welle besteht, deren seitliche Enden über Zapfen
29 in Lagerbuchsen 32 eines seitlichen Kragarmes 30 starr
befestigt sind, der drehfest auf der Achse 24 angeordnet
ist. Am Träger 24a sind in bekannter Weise Stäbe 36 des
Siebrostes 34 lösbar befestigt, die vorzugsweise aus
Federstahl gefertigt sind und untereinander einen Abstand
35 aufweisen, der ggf. verstellbar sein kann.

Das von den Zinken 20 der Werkzeugwelle 19 gelockerte
und nach hinten geworfene Gemisch aus Feinerde, Krümeln
und Schollen wird durch die horizontalen Zwischenräume
zwischen den Längsstäben 27 hindurch gegen den Siebrost
34 geworfen, so daß die Feinerde und kleine Krümel bzw.
Schollen zwischen den Stäben 36 in das Innere der Krümelwalze 23 gelangen, während die halmartigen Ernterückstände
und verfilztes Material von dem Siebrost 34 zurückgehalten
werden. Es wird laufend von den Längsstäben 27 entlang der
Stäbe 36 nach unten weitergeschoben und von den in einstellbarer Tiefe in der losen Erde laufenden Längsstäben 27 eingemischt und durch die aus dem Innern der Krümelwalze 23
austretenden Feinerde zusätzlich bedeckt.

Da sich der Siebrost 34 nicht mit Ernterückständen zusetzen kann, bleibt seine volle Siebwirkung stets er-

- 7 -

halten, so daß folgende günstige Bodenschichtung entsteht:

Die oberste Bodenschicht besteht überwiegend aus Feinerde und kleinen Krümeln bzw. Erdschollen. Die darunter
liegende Schicht besteht aus Feinerde, kleineren Krümeln
und größeren Erdschollen, die mit Stroh und Ernterückständen vermischt sind. Bei Verwendung eines an sich bekannten "Zwei-Schichtengrubbers" entsteht unter diesen
beiden oberen Bodenschichten eine weitere, nicht durch
das Gerät zur Saatbettherrichtung fein zerkleinerte,
sondern lediglich durch an den Flügelscharen angebrachten
(nicht dargestellten) zusätzlichen Grubberzinken grobschollig zerkleinerte Unterkrume.
Diese Schichtung des bearbeiteten Bodens entspricht
einem Ideal, das bisher von keinem Gerät verwirklicht
werden konnte, aber die besten Keimbedingungen für das
Pflanzen- und Wurzelwachstum bietet.

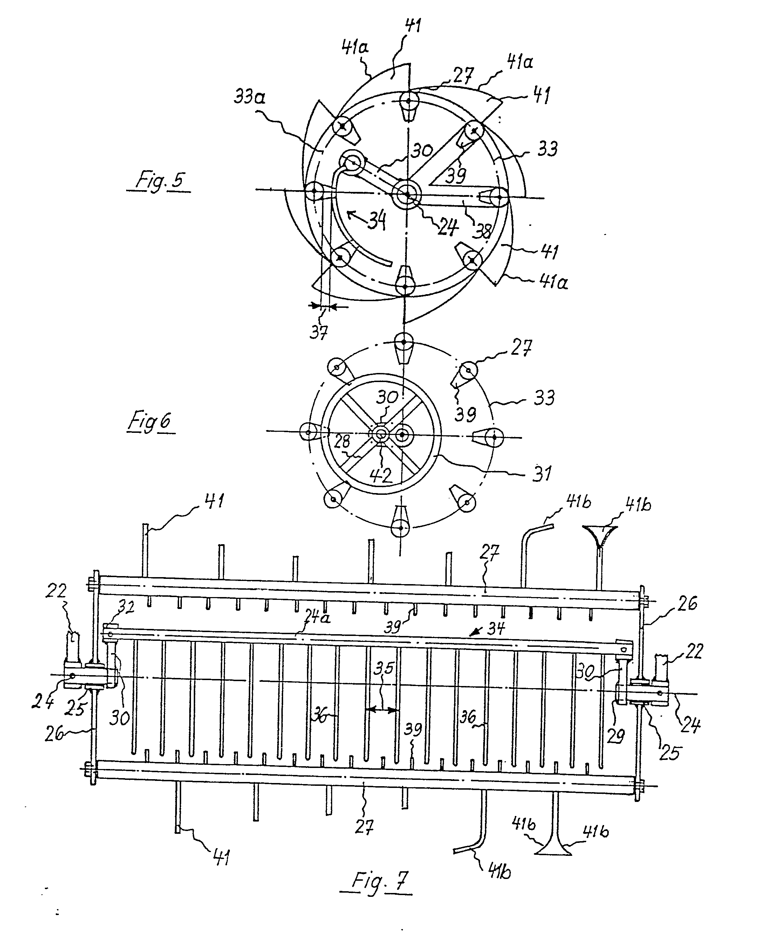

Wie aus Fig. 4 ersichtlich ist, kann der Siebrost 34
auch als aus in einem Abstand zueinander angeordneten
Ringen bestehende Siebtrommel 31 ausgebildet werden.

Dies hat den Vorteil, daß sich die Siebleistung des Siebrostes vor allem durch mechanischen Antrieb der Siebtrommel erhöhen läßt.

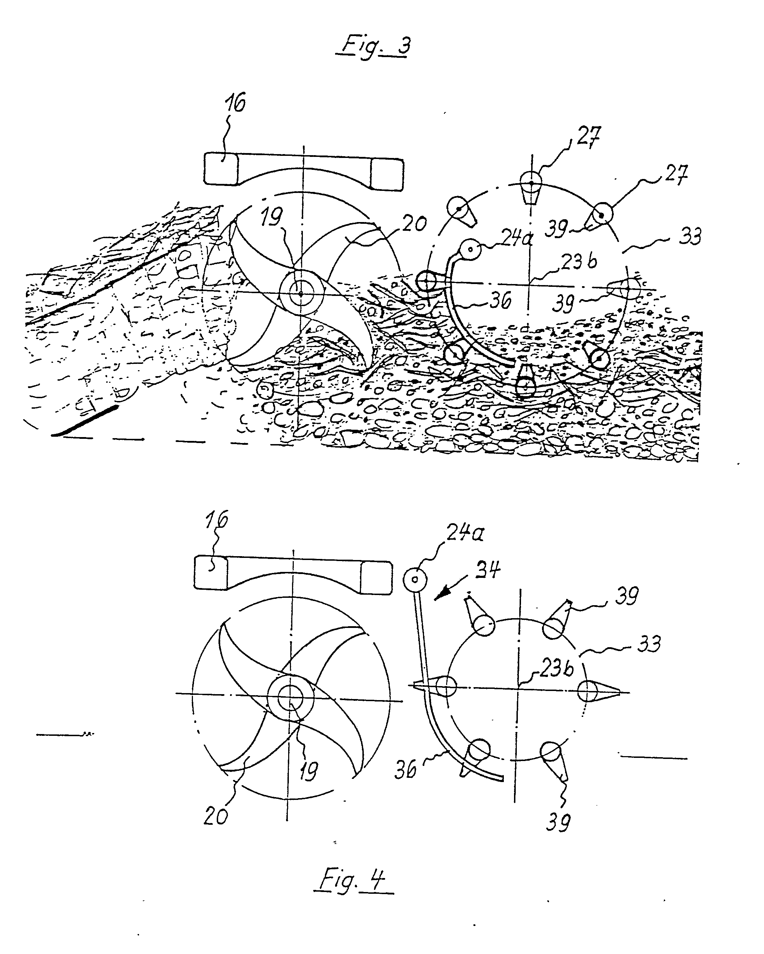

Wie ferner aus Fig. 3 - 4 ersichtlich, können wenigstens einige Längsstäbe 27 mit radial stehenden Zinken 39 versehen werden, die bei jedem Umlauf der Krümelwalze wenigstens einmal durch jeden Zwischenraum zwischen zwei benachbarten Stäben 36 kämmen, um ihn von festsitzenden Erdkrümeln, Steinen oder Halmen zu reinigen. Diese Anordnung hat den Vorteil, daß sich die Krümelwalze selbst reinigt, da sie sich nicht mit feuchter Erde füllen kann.

Eine weitere, zeichnerisch nicht dargestellte Ausgestaltung der Erfindung kann noch darin bestehen, daß zusätzliche Greifer auf den Speichern oder den seitlichen Scheiben der Krümelwalze angebracht werden, um auch in losem oder schwerem Boden bzw. bei größerer Arbeitstiefe einen sicheren Bodenantrieb der Krümelwalze 23 sicherzustellen.

Um zu vermeiden, daß das eingemischte Stroh auf ein und derselben Ebene in den Erdboden eingemischt eine Strohmatraze bildet, können, wie aus Fig. 5 zu ersehen

- 9 -

ist, jeweils ein oder zwei benachbarte Längsstäbe 27
mit in entsprechenden Abständen nebeneinander befestigten Armen 40 oder Kurvensegmenten 41 versehen
werden, deren äußere Kanten sich in einem spitzen
Winkel zur Umlaufbahn 33 der Krümelwalze radial, aber
in unterschiedlicher Höhe entgegen dem Drehsinn nach
außen erstrecken.

Sie mischen das in das lose Erdreich eingebettete Stroh
unterschiedlich tief ein, sind aber so geformt, daß sie
es bei ihrem Austreten aus dem Erdreich nicht an der
Rückseite der Krümelwalze 23 nach oben herausstreifen.
Dadurch kann erreicht werden, daß das Stroh in unterschiedlicher Tiefe in der losen Erde verteilt abgelegt
wird.

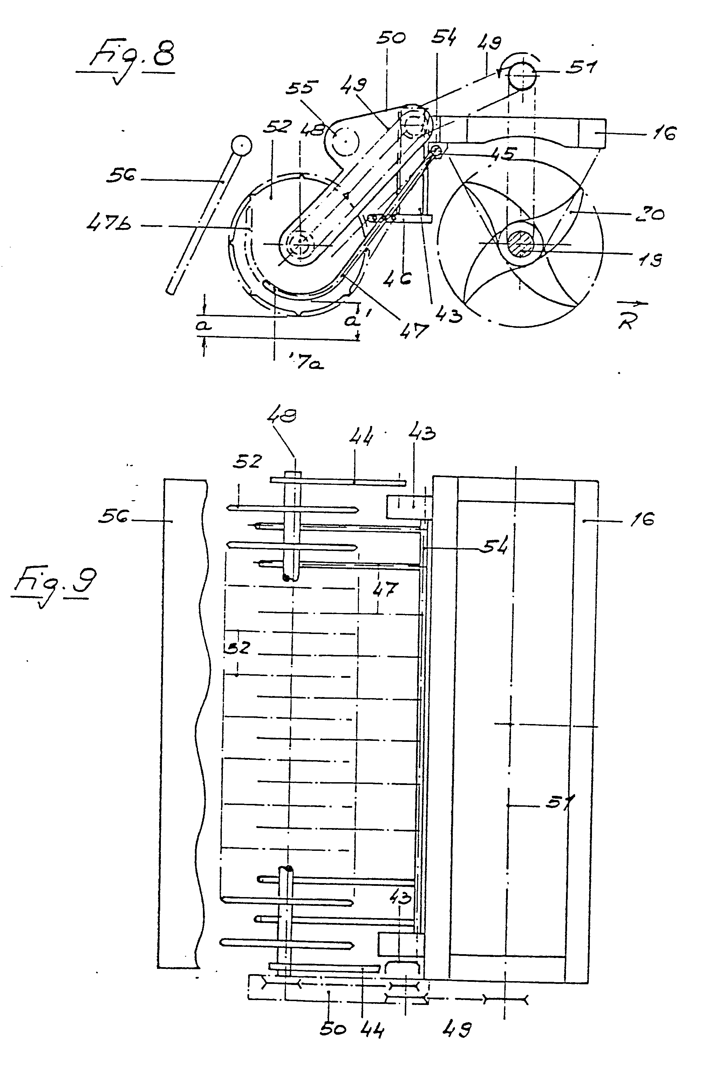

Ferner ist es möglich, die oberen Teile dieser Segmente
41a, wie in Fig. 7 dargestellt, seitlich abzubiegen,
damit jedes Segment eine zusätzliche Schaufelwirkung
ausübt, weil es beim Durchgang durch die lose Erde
einen Teil der Erde auf seiner Innenseite mit nach oben
nimmt, der bei weiterer Drehung der Krümelwalze von
oben auf den Erdboden aufgestreut wird.

- 10 -

Eine weitere, zeichnerisch nicht dargestellte Ausgestaltung kann noch darin liegen, die Krümelwalze mechanisch oder hydraulisch so anzutreiben, daß ihre Umfangsgeschwindigkeit größer als die Fahrgeschwindigkeit des Gesamtgerätes ist.

Dadurch kann auch unter ungünstigen Einsatzverhältnissen je nach der Umfangsgeschwindigkeit eine noch intensivere und gleichmäßigere Zerkleinerung des Erdbodens und Einmischung des Strohes in den zerkleinerten Erdboden erreicht werden.

Schließlich ist bei der Alternativausführung gemäß Fig. 8 und 9 noch vorgesehen, daß an einem ebenflächigen Tragrahmen 16 in nicht näher dargestellter Weise eine mit Zinken 20 besetzte Werkzeugwelle 19 drehend angetrieben gelagert wird.

An den Tragrahmen 16 sind zudem sich entgegen der Fahrtrichtung erstreckende Konsolen 43 angebracht, die einerseits z.B. über Zugstangen 44 zum Anschluß der Krümelwalze dienen und zum anderen die Halterung 45 und Führung 46 für das rechenförmige Leitelement 47 bilden.

Die Krümelwalze 48, die mittels der strichpunktiert angedeuteten Antriebsverbindungen 49 über das Seiten-

- 11 -

getriebe 50 mit dem Hauptantrieb 51 gekoppelt ist,
besteht dabei aus einer Aneinanderreihung gezahnter
Scheiben 52, die mit gegenseitigem Horizontalabstand
zueinander auf der Welle 53 liegen. In die Zwischenräume zwischen diesen Scheiben 52 ragen die einzelnen
Stäbe 47 des Ableitrechens hinein, der als Ganzes
um die Querachse 54 verstellbar und an seinen seitlichen Führungen 46 festlegbar ist; hierdurch kann
der Bodenabstand des Rechens beeinflußt bzw. verändert werden.

Diese Rechenanordnung bei einer drehend angetriebenen
Krümelwalze bewirkt nun, daß durch die Zwischenräume
zwischen den SCheiben und den Rechenstäben zwar die
zerkleinerte Erde hindurchgelangen und nach hinten
geschleudert werden kann, während die halmartigen
Teile und größeren Erdklumpen entlang der schräggestellten Stahlzinken nach unten auf den Boden fallen
und danach von der feingekrümelten Erde gleichmäßig
abgedeckt werden.

In weiterer Ausgestaltung dieser Erfindung kann dabei
noch vorgesehen sein, daß die Rechenstäbe 47 im Bereich

- 12 -

ihrer freien Enden 47a konzentrisch zur Krümmung
der Krümelwalze verlaufen, und in seitlicher Projektion dabei über die vertikale Mittelebene dieser
Walze hinaus verlängert sind.

Weiterhin ist es im Rahmen der vorliegenden Erfindung
auch möglich, in nicht dargestellter Weise die Antriebsrichtung der Krümelwalze umzukehren, wobei es
dann sinnvoll ist, die Verlängerungen gemäß 47b der
Rechenstäbe 47 annähernd vertikal und entgegen dem
Ackerboden aufwärts gerichtet auszuführen.

Mittel bekannter Art zum Spannen der Antriebsverbindungen 49, und, falls erforderlich, die Nachordnung
eines an sich bekannten Streichblechs 56 zu der gesamten maschinellen Einheit, vervollständigen die vorliegende Erfindung, deren wesentliche Vorteile in dem
völligen Verzicht auf tiefes Pflügen und noch darin
liegen, daß das Feld in einem Arbeitsgang vorbereitet
und zugleich auch bestellt werden kann. Hierdurch
wird nicht nur Arbeitszeit und Treibstoff gespart,
sondern die Bodenfeuchtigkeit bleibt voll erhalten
und gewährleistet einen optimalen Aufgang der Saaten,
so daß beste Voraussetzungen für höchste Erträge geschaffen werden.

Die Erfindung ermöglicht außerdem eine Beschleunigung der Bestellung, so daß u.a. auch die rechtzeitige Aussaat von Winterweizen sofort nach der oft sehr spät erfolgenden Ernte von Körnermais noch gelingt.

Eine zeichnerisch nicht dargestellte Alternativausführung zu dem Gerät gemäß Fig. 8 und 9 kann schließlich noch darin bestehen, die gezahnten Scheiben 52 durch solche zu ersetzen, die aus weitestgehend radial von der Welle 48 aus verlaufenden Zinken gebildet sind. Eine gegenüber den gezahnten Scheiben 52 noch verbesserte Krümelwirkung wird dabei dadurch erreicht, daß diese starren oder federnden Zinken in Umfangsrichtung schraubenlinienförmig versetzt zueinander liegen und somit beim Umlauf der Walze 48 jeweils den gesamten freien Raum zwischen zwei benachbarten Stäben 47 überstreichen.

<u>P a t e n t a n s p r ü c h e</u>

1. Arbeitsgerät zur Saatbettherrichtung, insbesondere
   zum Einmischen von Getreide- oder Körnermaisstroh in
   den Ackerboden, mit wenigstens einer sich etwa quer
   zur Fahrtrichtung und in horizontaler Ebene erstreckenden, mit Zinken oder Messern besetzten Werkzeugwelle,
   einem hinter derselben angeordneten Siebrost und einer
   in einem Abstand hinter diesem angeordneten, etwa zylindrisch geformten Krümel- oder Packerwalze, deren gedachte Mantelfläche durch in einem erheblichen Abstand
   voneinander angeordnete Längsstäbe, -rohre oder -leisten
   gebildet wird, deren äußere Enden an mit der Drehachse
   der Krümelwalze verbundenen Speichen oder Scheiben befestigt sind,

   dadurch gekennzeichnet,

   daß der Siebrost in einem geringen Abstand (37) und wenigstens annähernd parallel zu dem nach vorne unten gerichteten Teil (33a) der Umlaufbahn (33) der Längsstäbe
   (27) der Krümelwalze (23) angeordnet ist.

- 2 -                                   0039792

2. Arbeitsgerät nach Anspruch 1,

   dadurch gekennzeichnet,

   daß der Siebrost (34) innerhalb der Umlaufbahn (33) der Längsstäbe (27) angeordnet ist.


3. Arbeitsgerät nach Anspruch 2,

   dadurch gekennzeichnet,

   daß die Drehachse (23b) der Krümelwalze (23) als Hohlnabe (25) ausgebildet ist, die auf einer im Innern der Krümelwalze (23) angeordneten, feststehenden Achse (24) drehbar gelagert ist, die als Träger (24a) des Siebrostes (34) dient.


4. Arbeitsgerät nach Anspruch 3,

   dadurch gekennzeichnet,

   daß der Siebrost (34) durch in vorzugsweise verstellbaren Abständen (35) voneinander angeordnete, mit einem Ende an der Achse (24) befestigte Stäbe (36) gebildet ist.


5. Arbeitsgerät nach einem der Ansprüche 1 bis 4,

   dadurch gekennzeichnet,

   daß die Stäbe (36) des Siebrostes (34) an dem nahe der Umlaufbahn der Längsstäbe der Krümelwalze angeordneten Mittelteil (24a) der wenigstens viermal abgekröpften Achse (24) lösbar und verstellbar befestigt sind.

6. Arbeitsgerät nach einem der vorhergehenden Ansprüche,

   dadurch gekennzeichnet,

   daß die Stäbe (36) begrenzt beweglich und unter Federkraft stehend an den Trägern (24a) befestigt sind.


7. Arbeitsgerät nach Anspruch 1,

   dadurch gekennzeichnet,

   daß der Siebrost (34) als im Innern der Krümelwalze umlaufende Siebtrommel (31) ausgebildet ist.


8. Arbeitsgerät nach einem der vorhergehenden Ansprüche,

   dadurch gekennzeichnet,

   daß die Längsstäbe (27) der Krümelwalze (23) lösbar und/
   oder in unterschiedlichem Abstand zueinander an Speichen
   (38) oder Scheiben (26) befestigt sind.


9. Arbeitsgerät nach einem der vorhergehenden Ansprüche,

   dadurch gekennzeichnet,

   daß wenigstens einer oder mehrere der Längsstäbe (27)
   mit radialen Zinken (39) versehen sind, die zwischen
   die Stäbe (36) des Siebrostes (34) greifen.


10. Arbeitsgerät nach einem der vorhergehenden Ansprüche,

    dadurch gekennzeichnet,

    daß wenigstens einige der Längsstäbe (27) sich radial

- 4 -

nach außen erstreckende Arme (40) oder Kurvensegmente
(41) tragen, deren äußere Kanten (40a, 41a) entgegen
der Bewegungsrichtung der Krümelwalze (23) radial nach
außen ansteigend verlaufen.

11. Arbeitsgerät nach einem der vorhergehenden Ansprüche,
dadurch gekennzeichnet,
daß die Arme (40) oder Kurvensegmente (41) an ihrem
oberen Teil (40b, 41b) bogenförmig seitlich abgewinkelt sind.

12. Arbeitsgerät nach einem der vorhergehenden Ansprüche,
dadurch gekennzeichnet,
daß die Krümelwalze (23) mit einer die Fahrgeschwindigkeit des Arbeitsgerätes übersteigenden Umfangsgeschwindigkeit antreibbar ist.

13. Arbeitsgerät nach Anspruch 1,
dadurch gekennzeichnet,
daß die Krümelwalze (48) aus einzelnen, mit gegenseitigem Abstand zueinander liegenden, vorzugsweise
gezahnten Scheiben (52) besteht und die einzelnen
Stäbe (47) des Rostes bzw. Rechens jeweils vor bzw.
innerhalb der freien Räume zwischen den Scheiben
(52) der Krümelwalze (48) verlaufen.

14. Arbeitsgerät nach Anspruch 13,

    dadurch gekennzeichnet,

    daß die Rechenstäbe (47) an einem gemeinsamen Querträger (54) zusammengefaßt und als Ganzes in ihrem
    bodenseitigen Abstand verstellbar am Geräterahmen
    (16 bzw. 43) gelagert sind.

15. Arbeitsgerät nach den Ansprüchen 13 und 14,

    dadurch gekennzeichnet,

    daß die Rechenstäbe (47) im Bereich ihrer freien Enden (47a) konzentrisch zur Krümmung der Krümelwalze
    (48) verlaufen.

16. Arbeitsgerät nach den Ansprüchen 13 bis 15,

    dadurch gekennzeichnet,

    daß die freien Enden (47a) der Rechenstäbe (47) in
    seitlicher Projektion über die vertikale Mittelebene der Krümelwalze (48) hinaus verlängert sind.

17. Arbeitsgerät nach Anspruch 16,

    dadurch gekennzeichnet,

    daß sich die Verlängerungen (47b) der Rechenstäbe (47)
    annähernd vertikal und entgegen dem Ackerboden aufwärts erstrecken.

18. Arbeitsgerät nach einem oder mehreren der vorhergehenden Ansprüche,

   dadurch gekennzeichnet,

   daß der Antrieb (49) der Krümelwalze vom Antrieb (51) der Rotoregge (19) abgeleitet, ggf. drehrichtungsumkehrbar und als Seitengetriebe (50) ausgebildet ist.

19. Arbeitsgerät nach den vorhergehenden Ansprüchen,

   dadurch gekennzeichnet,

   daß die Krümelwalze (48) höhenverstellbar am Geräterahmen (16) gelagert und der gesamten Einheit ein an sich bekanntes Streichblech (56) nachgeordnet ist.

20. Arbeitsgerät nach mindestens einem der vorhergehenden Ansprüche,

   dadurch gekennzeichnet,

   daß die Krümelwalze (48) anstelle der gezahnten Scheiben (52) mit solchen aus radial von der Walzenwelle (48) abstehenden, mehr oder weniger starren bzw. federnden Zinken besteht und diese Zinken in Umfangsrichtung schraubenlinienförmig versetzt zueinander liegen.

_Fig. 1_

_Fig. 2_

0039792

Fig. 3

Fig. 4

0039792

*Fig.5*

*Fig 6*

*Fig. 7*

Fig. 8

Fig. 9

| | | | |
|---|---|---|---|
| **Europäisches Patentamt** | **EUROPÄISCHER RECHERCHENBERICHT** : | Nummer der Anmeldung EP 81 10 2797.8 | |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | DE – A1 – 2 707 617 (C. VAN DER LELY N. V.)<br>* Seite 8, Zeile 3 bis Seite 9, Zeile 3; Fig. 1 *<br>-- | 1,12, 13 | A 01 B 49/02<br>A 01 B 29/04 |
| | DE – A – 1 939 182 (C. VAN DER LELY N. V.)<br>* Seite 2, letzter Absatz bis Seite 3, Absatz 1; Seite 8, vorletzter Absatz; Fig. 1 *<br>-- | 1,12,18 | |
| | DE – A1 – 2 749 656 (C. VAN DER LELY N. V.)<br>* Seite 8, Zeilen 10 bis 20; Fig. 3 bis 5 *<br>-- | 12,13, 19 | **RECHERCHIERTE SACHGEBIETE (Int. Cl.³)**<br><br>A 01 B 29/00<br>A 01 B 49/00 |
| | DE – B – 2 251 699 (PFLUGFABRIK LEMKEN KG)<br>* Anspruch 1; Fig. 1 bis 4 *<br>-- | 19 | |
| | AT – B – 311 101 (H. PONGRATZ)<br>* Ansprüche 1, 3; Fig. 1 und 3 *<br>-- | 20 | **KATEGORIE DER GENANNTEN DOKUMENTE** |
| A | DE – A1 – 2 818 718 (HOWARD MACHINERY)<br>* Seiten 3 bis 4; Fig. 1 *<br>-- | 7 | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze |
| A | DE – A1 – 2 439 595 (MASCHINENFABRIK RAU OHG)<br>* Seiten 1 bis 2; Fig. 9 bis 12 *<br>---- | | E: kollidierende Anmeldung<br>D: in der Anmeldung angeführtes Dokument<br>L: aus andern Gründen angeführtes Dokument |
| X | Der vorliegende Recherchenbericht wurde für alle Patentansprüche erstellt. | | &: Mitglied der gleichen Patent-familie, übereinstimmendes Dokument |

| Recherchenort | Abschlußdatum der Recherche | Prüfer | |
|---|---|---|---|
| Berlin | 21-07-1981 | SCHOFER | |

EPA form 1503.1 06.78